# EUROPEAN PATENT APPLICATION

(11) **EP 4 588 589 A1**
(43) Date of publication of application: **23.07.2025**
(21) Application number: 25151363.6
(22) Date of filing: 10.01.2025
(51) Int. Cl.: B21D 41/02, B29C 57/04

(54) **SWAGE TOOL**

(30) Priority: 18.01.2024 US 202463622253 P
(71) Applicant: Black & Decker, Inc., New Britain, CT 06053 (US)
(72) Inventor: McMANUS, Samuel C., Bel Air, 21014 (US); STREETT, Thomas E., Fallston, 21047 (US)
(74) Representative: SBD IPAdmin

(57) **Abstract**

A tool operable to expand an end of a pipe, such as copper tubing, has a cylindrical jaw assembly with semi-cylindrical jaws movable between a closed position and an expanded position and rotatable about a longitudinal axis. A motor drives an output spindle driven by the motor, which in turn drives a radial cam. A wedge is movable by the radial cam in a reciprocating motion along the axis, causing the wedge to move between a first position where the jaws are in the closed position and a second position where the jaws are in the expanded position. A rotating ring is mounted on the wedge and connected to the jaws. The rotating ring is driven by the output spindle for rotating the jaws about the axis.

## Description

### FIELD

The present invention relates to pipe and tubing expansion tools and methods. More particularly, the present invention relates to swaging expansion tools for swaging malleable metal tubing, such as copper, that utilize a multi-segment expansion head, and an auto-rotation feature.

### BACKGROUND

Swage tools are generally used for enlarging or "swaging" the diameter of a portion of malleable tubing or piping made of malleable copper, aluminum, brass, etc. The process of swaging a tube or a pipe enables a subsequent tube or pipe to be inserted within the enlarged diameter end of the tube or pipe, thereby eliminating the need for a separate mechanical coupling for connecting two tubes or pipes together. In the case of malleable metal tubing, the process of swaging a tube decreases the number of joints required to be welded from two joints (each interface between the mechanical coupling and the two pipes) to one joint.

### DESCRIPTION OF THE DRAWINGS

Preferred embodiments of the invention will now be described, by way of example, with reference to the accompanying drawings, of which:
Figure 1 is a right side view of the tool according to an embodiment of the invention;
Figure 2 is a partial cross-sectional view from the right side;
Figures 3A-3C are partial perspective views of the jaws rotating/expanding mechanism.
Figure 4 is a top view of a radial cam used in the jaws rotating/expanding mechanism of Figures 3A-3C.
Figure 5 is a front perspective view of an index cam used in the jaws rotating/expanding mechanism of Figures 3A-3C.
Figures 6A-6C show a jaw assembly to be rotated and expanded by the jaws rotating/expanding mechanism of Figures 3A-3C, where Figures 6A-6B are perspective and cross-sectional views thereof, respectively, in a retracted position, and Figure 6C is a cross-sectional view thereof in an expanded position.
Figures 7A-7B show an alternate jaw assembly to be rotated and expanded by the jaws rotating/expanding mechanism of Figures 3A-3C, where Figures 7A-7B are perspective and exploded views thereof, respectively.
Figures 8A-8D show the jaw assembly of Figures 7A-7B, where Figure 8A is a cross-sectional view, Figure 8B is a perspective view in a first rotational position of head 34, and Figures 8C-8D are front and rear perspective views of a second rotational position of head 34, respectively.

### DETAILED DESCRIPTION

Referring now to the drawings, an expanding tool 10 includes a housing 11 preferably including a handle 11 HH, a jaw assembly 30 disposed on housing 11, a jaws rotating/expanding mechanism 20 disposed within housing 11, and a motor 15 for driving jaws rotating/expanding mechanism 20. A power tool battery pack 12 may be attached to housing 11 and electrically connected to tool 10 in order to power motor 15.

Housing 11 may be made of a high-impact plastic, such as polybutylene terephthalate (PBT) or PA6 nylon. Housing 11 may be overmolded with a rubber-like material 11O for better grip.

Housing 11 may also include a housing portion 11H for at least partially encasing jaws rotating/expanding mechanism 20. Housing portion 11H is preferably made of metal, such as aluminum or magnesium.

For details on power tool battery pack 12, persons skilled in the art are referred to US Patent Nos. 6,996,909 and 7,661,486. Power tool battery pack 12 is preferably electrically connected to tool terminals 11T, and in turn to switch 13S.

Switch 13S may be activated by a trigger 13T, which is movable relative to housing 11. The motion of trigger 13T is transferred to activate switch 13S via a link 13L. A spring (not shown) preferably biases trigger 13T away from housing 11. Persons of ordinary skill in the art are hereby referred to US Patent No. 9,975,289 for more details on the construction of the expanding tool 10.

Upon activation of switch 13S, power from power tool battery pack 12 is transferred to motor 15. Motor 15 preferably drives a four-stage planetary gear transmission 16, which has an output spindle 16S.

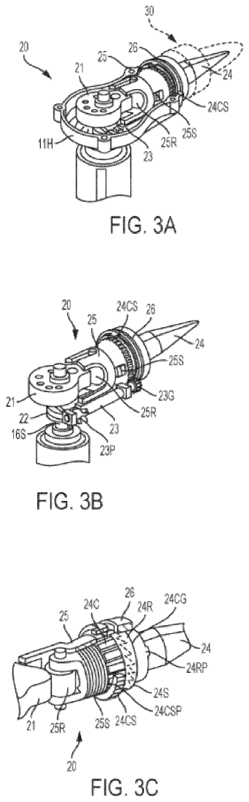

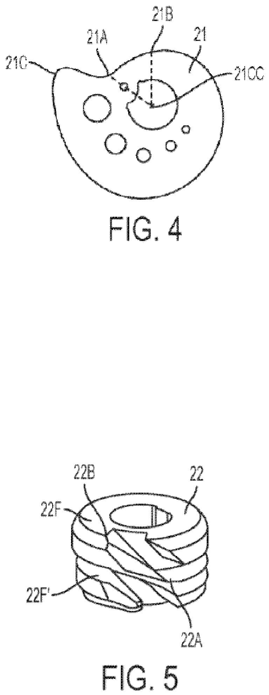

Referring to Figures 3A-5, jaws rotating/expanding mechanism 20 may include a radial cam 21 and an index cam 22. Preferably radial cam 21 and index cam 22 are keyed and/or fixedly attached to output spindle 16S, so that radial cam 21 and index cam 22 rotate together with output spindle 16S. Index cam 22 engages protrusions 23P on shaft 23. Shaft 23 may carry a gear 23G at one end. Preferably shaft 23 rotates about an axis substantially perpendicular to the axis of output spindle 16S.

Jaws rotating/expanding mechanism 20 may also include a wedge 24, which preferably moves in a reciprocating motion. Wedge 24 may be connected to a sleeve 25. Sleeve 25 may slidingly support a roller assembly 25R, which contacts radial cam 21. A spring 25S may abut an end of wedge 24 and roller assembly 25R, thus biasing roller assembly 25 towards radial cam 21.

A clutch ring 24C and a rotation ring 24R are preferably mounted on and around wedge 24. Preferably wedge 24, clutch ring 24C and rotation ring 24R are substantially coaxial. Clutch ring 24C and rotation ring 24R preferably have sawtooth-shaped teeth 24S that engage each other, so that clutch ring 24C and rotation ring 24R can rotate together about wedge 24. Clutch ring 24C and rotation ring 24R may also slide along wedge 24.

Clutch ring 24C may have axial grooves 24CG. Such grooves 24CG may be engaged by protrusion(s) 24CSP of a gear ring 24CS. Persons skilled in the art will note that the axial position of gear ring 24CS is preferably fixed in order to maintain contact with gear 23G. By having protrusion(s) 24CSP engage grooves 24CG, gear ring 24CS will preferably rotate together clutch ring 24C, while allowing clutch ring 24C to separately move along its axis.

Persons skilled in the art will recognize that, if rotation ring 24R were to jam or stall and no longer rotate, if protrusions 24CSP force clutch ring 24C to rotate, the sawtooth-shaped teeth 24S of clutch ring 24C will ride along the sawtooth-shaped teeth 24S of rotation ring 24R, separating clutch ring 24C from rotation ring 24R. After a tooth 24S of clutch ring 24C has cleared the corresponding tooth 24S of rotation ring 24R, spring 25S pushes clutch 24C towards rotation ring 24R, allowing clutch ring 24C to continue to rotate and ride along the sawtooth-shaped teeth 24S without damaging the different components of jaws rotating/expanding mechanism 20.

A collar 26 captures clutch ring 24C, rotation ring 24R and wedge 24.

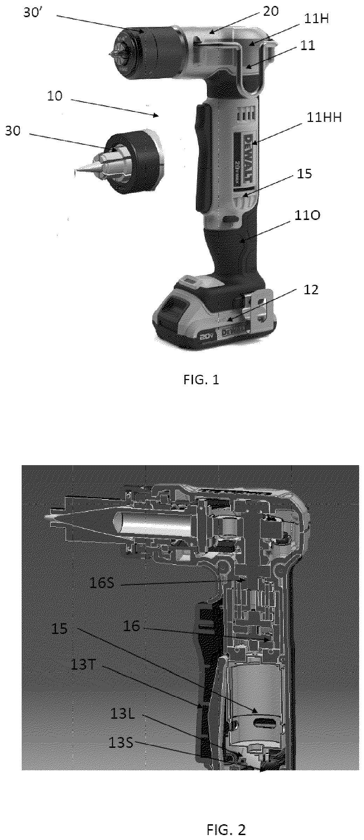

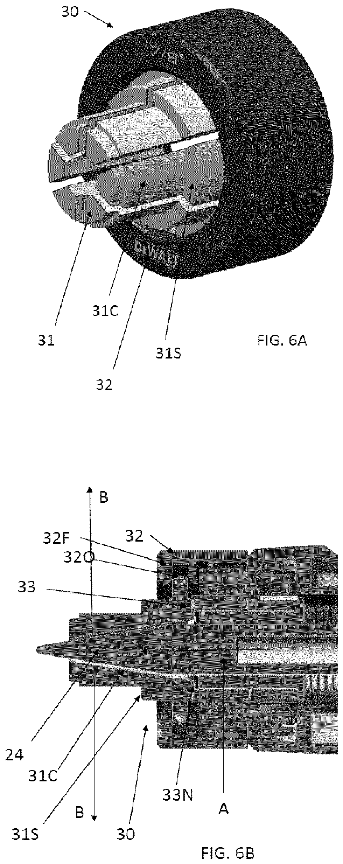

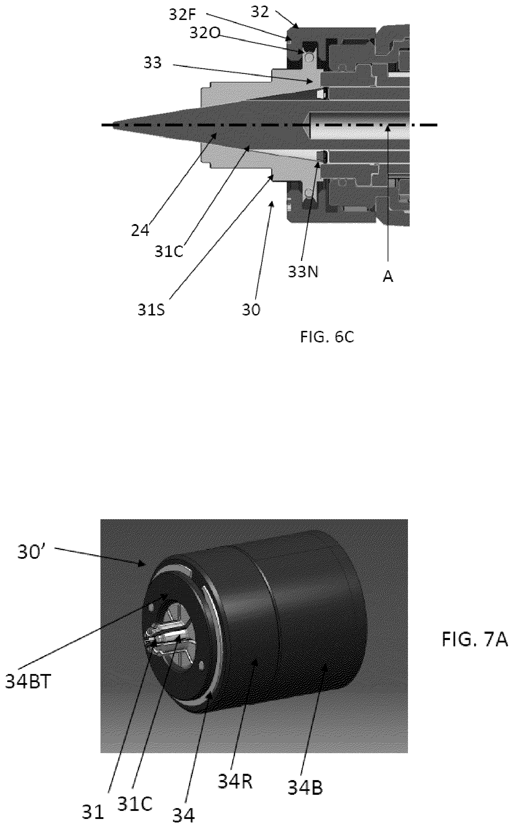

Referring to Figure 1, expanding tool 10 may have jaw assembly 30 shown in Figures 6A-6C and/or jaw assembly 30' shown in Figures 7A-8D.

Referring to Figures 6A-6C, jaw assembly 30 preferably engages rotation ring 24R and/or collar 26, in a manner similar to that described in US Patent Nos. 8,517,715 and 8,763,439. Jaw assembly 30 includes a plurality of (preferably six) jaws 31, which is captured within a cap 32. Preferably jaws 31 are captured by a flange 32F of cap 32.

Persons skilled in the art will recognize that jaws 31 can slide along flange 32F when wedge 24 moves along direction A so that jaws 31 can move away from the axis of wedge 24 along direction B. Jaws 31 have a groove that receives a spring 32O, which is preferably disposed around all portions of jaws 31. With such arrangement, when wedge 24 moves in a direction opposite to direction A, jaws 31 will retract towards each other and/or towards the axis of wedge 24 in a direction opposite to direction B. Persons skilled in the art will recognize that jaws 31 will translate radially away and toward the axis of wedge 24 during the opening and closing operation of jaws 31.

Each jaw 31 preferably includes a cylindrical segmented portion 31C. In the illustrated construction, two or more jaws 24 are used to define a complete 360-degree jaw section that fits within a tube to be expanded. Preferably, jaw 31 has a shoulder 31S to assist in locating the end of the pipe relatively to the portion 31C.

Cap 32 can be engaged to housing 11H and/or collar 26. Preferably cap 32 is threadingly engaged to collar 26.

Each jaw 31 preferably includes a second end 33. Each end 33 preferably has at least one protrusion 33N that engages a corresponding notch 24RP on rotating ring 24R. Alternatively, persons skilled in the art shall recognize that protrusion 33N and notch 24RP may be disposed on rotating ring 24R and end 33, respectively.

With such arrangement, when the output spindle 16S drives the index cam 22 to rotate, protrusion 23P of shaft 23 contacts the surface at point 22A of index cam 22. At the same time roller 25R contacts the surface at point 21A of radial cam 21. As index cam 22 continues to rotate so that protrusion 23P moves along the surface towards point 22B of index cam 22, radial cam 21 will also rotate so that roller 25R moves along the surface towards point 21B of radial cam 21.

As index cam 22 rotates therealong, shaft 23 also rotates, causing gear 23G (and thus gear ring 24CS) to rotate. The rotation of gear ring 24CS causes clutch ring 24C and rotating ring 24R to rotate. The rotation of rotating ring 24R causes in turn the rotation of jaws 31.

As index cam 22 rotates further, protrusion 23P will move along a flat surface 22F of index cam 22. Therefore shaft 23 will not rotate any further. Therefore, gear 23G, gear ring 24CS, clutch ring 24C, rotating ring 24R, collar ring 33 and jaws 31 will not rotate either.

At the same time protrusion 23P is moving along flat surface 22F, roller 25R is moving along the surface of radial cam 21. Preferably a second protrusion 23P will also move along a second flat surface 22F'. While the distance between the center 21CC and point 21A is the same as the distance between the center 21CC and point 21B, the distance between the center 21CC and a point in the cam surface will keep increasing until roller 25R contacts point 21C. Such increasing distance will cause roller 25R (and thus wedge 24) to move towards jaws 31, causing them to expand along direction B (as shown in FIG. 6C).

As radial cam 21 continues to rotate past point 21C towards point 21A, spring 25S pushes roller 25R into contact with radial cam 21 and pulls wedge 24 therealong towards radial cam 21. This allows spring 32O to pull jaws 31 towards the position shown in FIGS. 6A-6B.

The table below shows the different tubing sizes, as well as the distal outer diameter for the corresponding jaws 31 when the jaws 31 when closed and opened, respectively. Persons skilled in the art shall recognize that the measurements and distances could vary by as much as plus or minus 10% due to manufacturing tolerances.

| Sizes | Closed jaws outer diameter | Open jaws outer diameter |
|---|---|---|
| 1/4" | 4.18mm | 6.68 mm |
| 5/16" | 5.76 mm | 8.25 mm |
| 3/8" | 7.12 mm | 9.85 mm |
| 1/2" | 10.42 mm | 13.03 mm |
| 5/8" | 13.31 mm | 16.20 mm |
| 3/4" | 16.19 mm | 19.38 mm |
| 7/8" | 19.23 mm | 22.55 mm |
| 1-1/8" | 25.54 mm | 29.08 mm |
| 1-3/8" | 31.63 mm | 35.43 mm |
| 1-5/8" | 37.67 mm | 41.78 mm |

The table below shows the translational movement distance for each jaw 31 between the closing and opening action, for each tubing size. Persons skilled in the art shall recognize that the measurements and distances could vary by as much as plus or minus 10% due to manufacturing tolerances.

| Sizes | Translational movement distance |
|---|---|
| 1/4" | 1.25 mm |
| 5/16" | 1.245 mm |
| 3/8" | 1.365 mm |
| 1/2" | 1.305 mm |
| 5/8" | 1.445 mm |
| 3/4" | 1.595 mm |
| 7/8" | 1.66 mm |
| 1-1/8" | 1.77 mm |
| 1-3/8" | 1.9 mm |
| 1-5/8" | 2.055 mm |

Persons skilled in the art shall recognize that small-diameter copper tubing sometimes splits when swaging. It is preferable to provide a different jaw assembly 30' that requires a multi-step swaging process to avoid such tubing splits.

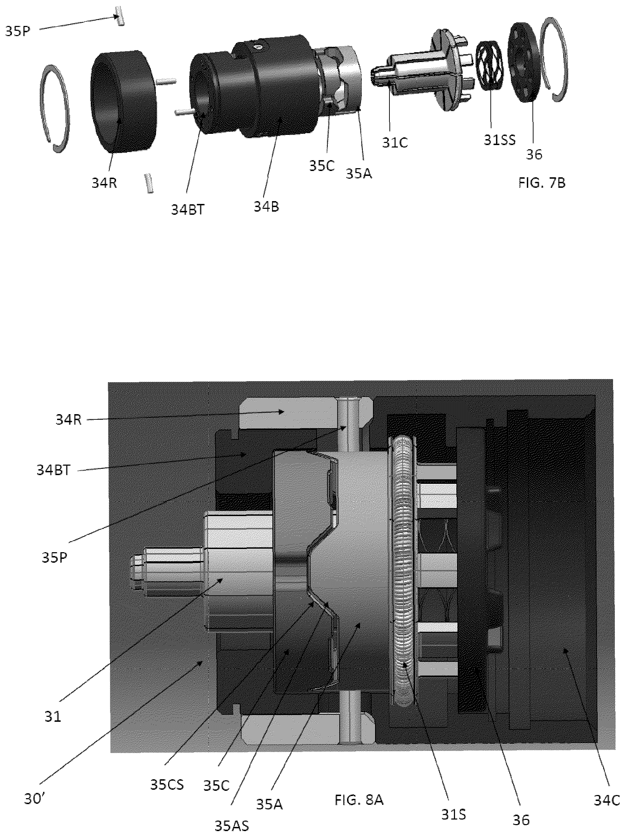

Referring to FIGS. 7A-7B and 8A-8D, where like numerals refer to like parts. Accordingly, jaw assembly 30' includes a plurality of (preferably eight) jaws 31, which is captured within an adjustable head 34. Head 34 can be engaged to housing 11H and/or collar 26. Preferably head 34 is threadingly engaged to collar 26.

Head 34 preferably has a body 34B and a rotatable portion 34R disposed unto body 34B. An adjustment ring 35A may be disposed within body 34B and/or adjustment rotatable portion 34R. Preferably, adjustment ring 35A has pins 35P connecting rotatable portion 34R to adjustment ring 35A.

Jaws 31 are preferably disposed within head 34, and preferably the distal portion 34BT of body 34B. A cam ring 35C is fixedly attached to body 34B and disposed between portion 34BT and adjustment ring 35A. Cam ring 35C may have at least one (and preferably a plurality) of cam surfaces 35CS. Similarly, adjustment ring 35A may have at least one (and preferably a plurality) cam surfaces 35AS that can engage with cam surfaces 35CS.

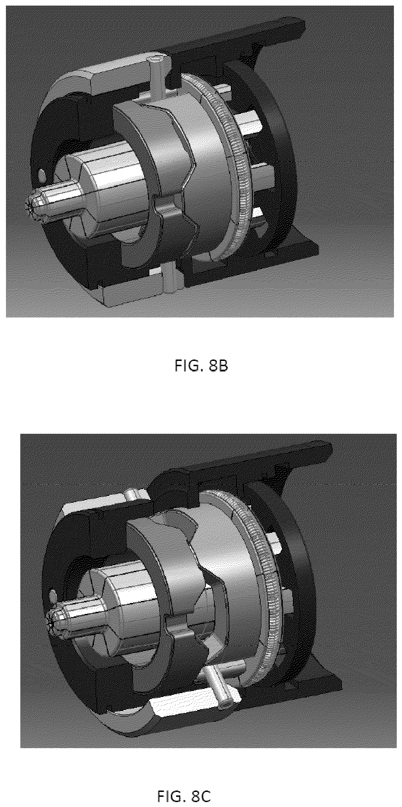

Persons skilled in the art shall recognize that, when the user rotates rotatable portion 34R from the position shown in FIG. 8B, the adjustment ring 35A will rotate therealong. As adjustment ring 35A rotates, the cam surfaces on adjustment ring 35A (e.g., cam surfaces 35AS) and/or cam ring 35C (e.g., cam surfaces 35CS) will move the adjustment ring 35A and jaws 31 rearwardly (FIG. 8C). Persons skilled in the art shall recognize that cam ring 35C may integrated into body 34B, so that the body 34B includes the cam surface(s) 34CS for contacting adjustment 35A and preferably cam surface(s) 35AS.

Preferably, a coil spring 31S (shown in FIG. 8A) is disposed around jaws 31, wrapping around and keeping jaws 31 together. A compression or wave spring 31SS (shown in FIG. 7B) may be disposed between jaws 31 and plate 36, applying a forward bias to the jaws 31.

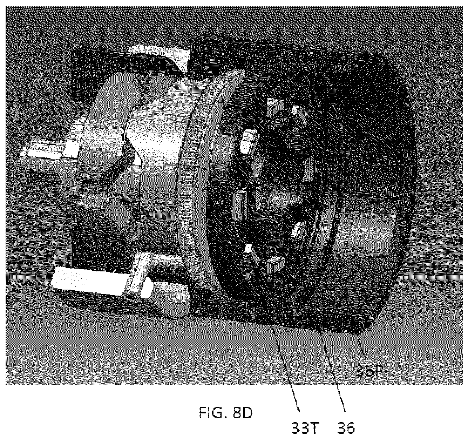

Referring to FIG. 8D, each jaw 31 preferably includes a tooth 33T that engages indexing plate 36. Plate 36 preferably has at least one protrusion 36P that engages a corresponding notch 24RP on rotating ring 24R. Alternatively, persons skilled in the art shall recognize that protrusion 36P and notch 24RP may be disposed on rotating ring 24R and plate 36, respectively.

It will be understood that the above description and the drawings are examples of particular implementations of the invention, but that other implementations of the invention are included in the scope of the claims.

## Claims

1. : A tool operable to expand an end of a malleable metal tubing, the tool comprising:
a housing;
a cylindrical jaw assembly disposed on the housing, the jaw assembly comprising a plurality of semi-cylindrical jaws rotatable about an axis and movable between a closed position where portions of the plurality of jaws are adjacent to the axis and an expanded position where the portions are moved away from the axis;
a motor disposed in the housing;
a wedge movable by the motor in a reciprocating motion along the axis;
wherein the wedge is movable between a first position where the plurality of jaws are in the closed position and a second position where the plurality of jaws are in the expanded position.

2. : The tool of Claim 1, further comprising an output spindle driven by the motor;
a radial cam connected to the output spindle;
wherein the wedge is movable by the radial cam in a reciprocating motion along the axis.

3. : The tool of Claim 2, further comprising an index cam connected to the output spindle;
a shaft connected to the index cam;
a rotating ring mounted on the wedge;
a clutch ring mounted on the wedge and engaging the rotating ring; and
a gear ring driven by the shaft and slidably engaging the clutch ring, optionally wherein the plurality of jaws is rotated when the shaft rotates or wherein the clutch ring can momentarily disengage from the rotating ring.

4. : The tool of Claim 5, wherein the clutch ring has teeth, and the rotating ring has teeth meshing with the teeth of the clutch ring, optionally wherein the teeth of the clutch ring can momentarily disengage from the teeth of the rotating ring.

5. : The tool of Claim 3, further comprising a sleeve connected to the wedge and contacting the radial cam.

6. : The tool of Claim 1, further comprising a power tool battery pack releasably connected to the housing and electrically connected to the motor.

7. : A tool operable to expand an end of a malleable metal tubing, the tool comprising:
a housing;
a cylindrical jaw assembly disposed on the housing, the jaw assembly comprising a plurality of semi-cylindrical jaws rotatable about an axis and movable between a closed position where portions of the plurality of jaws are adjacent to the axis and an expanded position where the portions are moved away from the axis;
a motor disposed in the housing;
an output spindle driven by the motor;
a radial cam connected to the output spindle;
a wedge movable by the radial cam in a reciprocating motion along the axis, the wedge being movable between a first position where the plurality of jaws are in the closed position and a second position where the plurality of jaws are in the expanded position; and
a rotating ring mounted on the wedge and connected to the plurality of jaws, the rotating ring being driven by the output spindle for rotating the plurality of jaws about the axis.

8. : The tool of Claim 10, further comprising a shaft connected to the output spindle and driving the rotating ring.

9. : The tool of Claim 11, wherein the shaft is connected to the output spindle by an index cam.

10. : The tool of Claim 11, further comprising:
a clutch ring mounted on the wedge and engaging the rotating ring; and
a gear ring driven by the shaft and slidably engaging the clutch ring optionally wherein the clutch ring can momentarily disengage from the rotating ring.

11. : The tool of Claim 14, wherein the clutch ring has teeth, and the rotating ring has teeth meshing with the teeth of the clutch ring.

12. : The tool of Claim 15, wherein the teeth of the clutch ring can momentarily disengage from the teeth of the rotating ring.

13. : The tool of Claim 10, further comprising a sleeve connected to the wedge, the sleeve contacting the radial cam.

14. : The tool of Claim 10, further comprising a power tool battery pack releasably connected to the housing and electrically connected to the motor.

15. : A tool operable to expand an end of a malleable metal tubing, the tool comprising:
a housing;
an adjustable head assembly engaged to the housing, the head assembly having a body, a rotatable portion disposed unto the body, and an adjustment ring disposed within at least one of the body and the rotatable portion, wherein the body has at least one cam surface contacting the adjustment ring;
a cylindrical jaw assembly disposed within the head assembly, the jaw assembly comprising a plurality of semi-cylindrical jaws rotatable about an axis and movable between a closed position where portions of the plurality of jaws are adjacent to the axis and an expanded position where the portions are moved away from the axis;
a motor disposed in the housing;
a wedge movable by the motor in a reciprocating motion along the axis;
wherein the wedge is movable between a first position where the plurality of jaws are in the closed position and a second position where the plurality of jaws are in the expanded position; and
wherein the adjustment ring is rotated, the cam surface moves the adjustment ring and jaws rearwardly, optionally wherein the adjustment ring has pins connecting the rotatable portion to the adjustment ring.
